# EUROPEAN PATENT APPLICATION

(11) **EP 2 547 128 A2**
(43) Date of publication of application: **16.01.2013**
(21) Application number: 12004983.8
(22) Date of filing: 05.07.2012
(51) Int. Cl.: H04W 8/00, G06Q 10/10, H04W 4/12

(54) **Reminding method and non-transitory machine readable media thereof**

(30) Priority: 05.07.2011 US 201161504317 P; 01.05.2012 US 201213461776
(71) Applicant: HTC Corporation, Taoyuan County 330 (TW)
(72) Inventor: Liu. Te-Chuan, Taoyuan City County 330 (TW); Chen, Li-Hui, Taoyuan City County 330 (TW)
(74) Representative: Wagner & Geyer

(57) **Abstract**

When a response signal of a second mobile electronic device in response to a polling signal from a first mobile electronic device is received by the first mobile electronic device , an alarm is issued on the first mobile electronic device about a message previously received by the first electronic device so as to remind a user of the first mobile electronic device of the message, where the first mobile electronic device and the second mobile electronic device utilize a same wireless communication protocol.

## Description

### Cross Reference To Related Applications

This application claims priority of US Provisional No. 61/504,317 filed on July 5, 2011.

### Background of the Invention

### 1. Field of the Invention

The present invention relates to a reminding method and non-transitory machine readable media thereof, and more particularly, to a reminding method using a wireless communication protocol and non-transitory machine readable media for performing the reminding method.

### 2. Description of the Prior Art

A popular way to remind people of tasks on his/her to-do-list is to set his/her schedule on mobile electronic devices, such as smart mobile phones. However, when a user of a mobile electronic device meets someone who has important businesses related to the user, it is always not easy to remind the user of the important business when they meet so that many missed opportunities for the user occur.

### Summary of the Invention

The claimed invention discloses a reminding method by using a wireless communication protocol. The reminding method comprises receiving a message targeting a second mobile electronic device by a first mobile electronic device, where the first mobile electronic device and the second mobile electronic device utilize a same wireless communication protocol; broadcasting a polling signal based on the wireless communication protocol by the first mobile electronic device; confirming, by the first mobile electronic device, whether a response signal in response to the polling signal is received from the second mobile electronic device; and issuing an alarm to indicate the message on the first mobile electronic device when the response signal from the second mobile electronic device is confirmed.

The claimed invention also discloses a non-transitory machine readable media. The non-transitory machine readable media comprises a first computer code, a second computer code, a third computer code, and a fourth computer code. When the first computer code is executed by a processor of a first mobile electronic device, the first computer code is configured to receive a message targeting a second mobile electronic device by the first mobile electronic device, where the first mobile electronic device and the second mobile electronic device utilize a same wireless communication protocol. When the second computer code is executed by the processor of the first mobile electronic device, the second computer code is configured to broadcast a polling signal based on the wireless communication protocol by the first mobile electronic device. When the third computer code is executed by the processor of the first mobile electronic device, the third computer code is configured to confirm whether a response signal in response to the polling signal is received from the second mobile electronic device. When the fourth computer code is executed by the processor of the first mobile electronic device, the fourth computer code is configured to issue an alarm to indicate the message on the first mobile electronic device when the response signal from the second mobile electronic device is confirmed.

These and other objectives of the present invention will no doubt become obvious to those of ordinary skill in the art after reading the following detailed description of the preferred embodiment that is illustrated in the various figures and drawings.

### Brief Description of the Drawings

FIG. 1 illustrates a first mobile electronic device and a second mobile electronic device for explaining the reminding method disclosed in the present invention.

FIG. 2 disclosed the reminding method according to an embodiment of the present invention, where the reminding method is performed on the mobile electronic devices 102 and 104 shown in FIG. 1.

### Detailed Description

For avoiding the above-mentioned missed opportunities, the present invention discloses a reminding method based on a wireless communication protocol according to an embodiment of the present invention. Note that the wireless communication protocol utilized in the present invention may be based on at least Bluetooth, WiFi, WiFi direct, near field communication, or peer-to-peer communication.

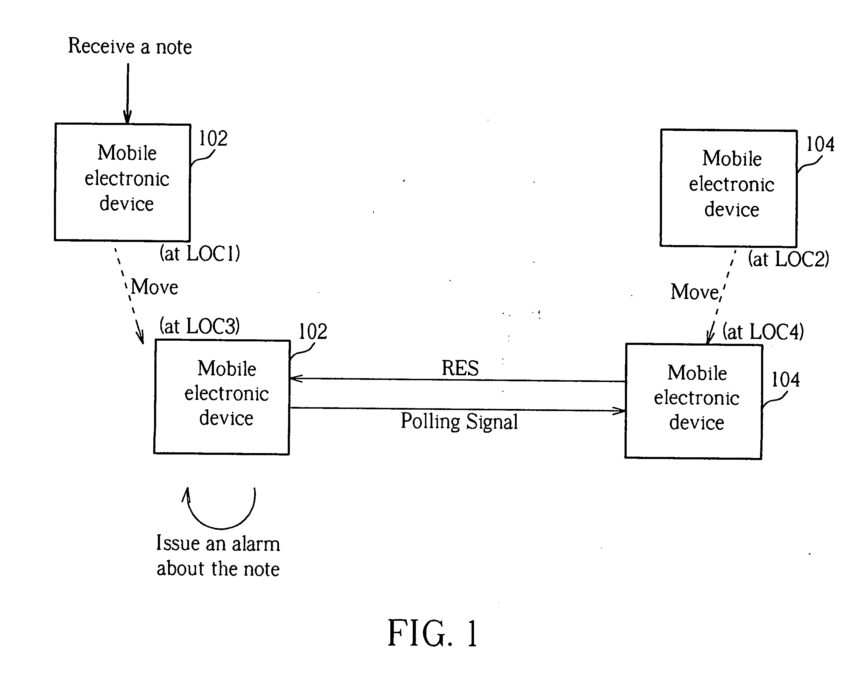

Please refer to FIG. 1, which illustrates a first mobile electronic device 102 and a second mobile electronic device 104 for explaining the reminding method disclosed in the present invention. It is assumed that a user of the first mobile electronic device 102 has a scheduled issue to be discussed with a user of the second mobile electronic device 104, where the first mobile electronic device 102 is originally located at a first location LOC1, the second mobile electronic device 104 is located a second location LOC2, and a previous distance between the mobile electronic devices 102 and 104 is larger than a maximal distance for both the mobile electronic devices 102 and 104 to transmit information to each other.

When the user of the first mobile electronic device 102 and the user of the second mobile electronic device 104 meets by accident, for example, the first mobile device 102 is assumed to be moved from the first location LOC1 to a third location LOC3, and the second mobile device 104 is assumed to be moved from the second location LOC2 to a fourth location LOC4, and a distance from the third location LOC3 to the fourth location LOC4 is smaller than the above-mentioned maximal distance for both the mobile electronic devices 102 and 104 to transmit information to each other.

A background example for FIG. 1 is assumed as the following description: The user of the first mobile electronic device 102 intends to have an important but unscheduled discussion with a user of the second mobile electronic device 104. For reminding himself of the discussion when unexpectedly meeting the user of the second mobile electronic device 104 in the future, the user of the first mobile electronic device 102 writes a message targeting the second mobile electronic device 104 to the first mobile electronic device 102 in advance as a reminder, where the message targeting the second mobile electronic device 104 means a purpose of the message is directly related to the second mobile electronic device 104.

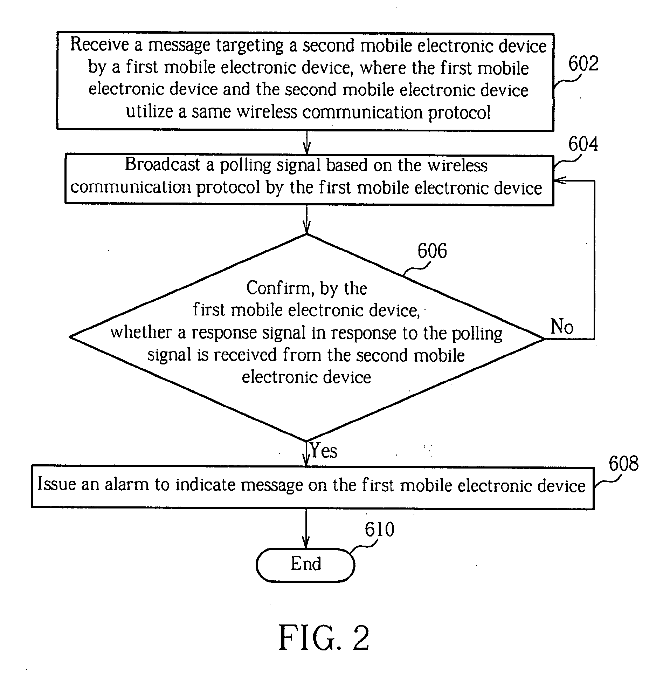

Please refer to FIG. 2, which disclosed the reminding method according to an embodiment of the present invention, where the reminding method is performed on the mobile electronic devices 102 and 104 shown in FIG. 1. As shown in FIG. 2, the reminding method includes steps as follows:

Step 602: Receive a message targeting a second mobile electronic device by a first mobile electronic device, where the first mobile electronic device and the second mobile electronic device utilize a same wireless communication protocol, and go to Step 604.

Step 604: Broadcast a polling signal based on the wireless communication protocol by the first mobile electronic device, and go to Step 606.

Step 606:Confirming, by the first mobile electronic device, whether a response signal in response to the polling signal is received from the second mobile electronic device; if the response signal is received by the first mobile electronic device, go to Step 608; else, go to Step 606.

Step 608: Issue an alarm to indicate message on the first mobile electronic device, and go to Step 610.

Step 610: End.

The following description basically follows the exemplary condition about FIG. 1.

In Step 602, the first mobile electronic device 102 currently located at the first location LOC1 receives the message from the user of the first mobile electronic device 102. Note that the wireless communication protocol may not be activated when the first mobile electronic device 102 is located at the first location LOC1. The user of the first mobile electronic device 102 issues a message to the first mobile electronic device 102 as a future reminder, where the message is set to be triggered when the first mobile electronic device 102 receives a response signal in the future.

In Step 604, the wireless communication protocol is activated so that the first mobile electronic device 102 can start broadcasting a polling signal in a dynamic manner, for confirming whether the response signal RES in response to the polling signal is received in Step 606.

If in Step 604 and Step 606, the current location of the first mobile electronic device 102 is moved from the first location LOC1 to the third location LOC3, and the current location of the second mobile electronic device 104 is moved from the second location LOC2 to the fourth location LOC4 so that a current distance from the first mobile electronic device 102 to the second mobile electronic device 104 is shorter than the maximal distance for both the mobile electronic devices 102 and 104 to transmit information to each other. Therefore, at this time, the second mobile electronic device 104 is capable of responding to the polling signal by issuing the response signal RES.

In Step 608, an alarm is issued by the first mobile electronic device 102 itself on the first mobile electronic device 102 to remind the user of the message previously issued to the first mobile electronic device 102.

Otherwise, in Step 604 and Step 606, if the first mobile electronic device 102 does not receive the response signal RES from the second mobile electronic device 104, Step 604 will be performed again so that the first mobile electronic device 102 keeps on broadcasting the polling signal, till receiving the response signal RES.

In one embodiment of the present invention, a predetermined time, a predetermined location, or both may be assigned along with the message when the message is issued to the first mobile electronic signal; therefore, when the predetermined time, the predetermined location, or both is reached, the first mobile electronic device 102 will start broadcasting the polling signal to confirm whether the response signal RES is received.

In embodiments of the present invention, the alarm could be any form of signals issued from the first mobile electronic device 102 to remind its user, for example, text messages, flashes, vibrations, or sounds.

With the aid of the reminding method shown in FIG. 2, the user of the first mobile electronic device 102 is unlikely to miss important business opportunities or discussions with the user of the second mobile electronic device 104 since he or she is always reminded on-time whenever the response signal RES is received by the first mobile electronic device 102 for confirming that the second mobile electronic device 104 falls within a reachable communication range of the first mobile electronic device 102.

A non-transitory machine readable media may be utilized for storing computer codes programmed according to the reminding method of the present invention, such as the reminding method disclosed in FIGs. 1-2, so that the stored computer codes may be run by a processor of any kind of mobile electronic device to fulfill the purpose of the present invention.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A reminding method by using a wireless communication protocol, comprising:
receiving a message targeting a second mobile electronic device by a first mobile electronic device, wherein the first mobile electronic device and the second mobile electronic device utilize a same wireless communication protocol;
broadcasting a polling signal based on the wireless communication protocol by the first mobile electronic device;
confirming, by the first mobile electronic device, whether a response signal in response to the polling signal is received from the second mobile electronic device; and
issuing an alarm to indicate the message on the first mobile electronic device when the response signal from the second mobile electronic device is confirmed.

2. The reminding method of claim 1 further comprising:
activating the wireless communication protocol on the first mobile electronic device.

3. The reminding method of claim 1 further comprising:
keeping on confirming whether the second mobile electronic device keeps on responding to the first mobile electronic device.

4. The reminding method of claim 1 wherein the alarm is a signal in the form of text messages, flashes, vibrations, or sounds.

5. The reminding method of claim 1 wherein the wireless communication protocol is based on Bluetooth, WiFi, WiFi direct, near field communication, or peer-to-peer communication.

6. A non-transitory machine readable media comprising:
computer code which when executed by a processor of a first mobile electronic device receives a message targeting a second mobile electronic device by the first mobile electronic device, wherein the first mobile electronic device and the second mobile electronic device utilize a same wireless communication protocol;
computer code which when executed by a processor of a first mobile electronic device broadcasts a polling signal based on the wireless communication protocol by the first mobile electronic device;
computer code which when executed by a processor of a first mobile electronic device confirms whether a response signal in response to the polling signal is received from the second mobile electronic device; and
computer code which when executed by a processor of a first mobile electronic device issues an alarm to indicate the message on the first mobile electronic device when the response signal from the second mobile electronic device is confirmed.
